# EUROPEAN PATENT SPECIFICATION

(11) **EP 1 564 637 B1**
(45) Date of publication and mention of the grant of the patent: **04.09.2019**
(21) Application number: 04003210.4
(22) Date of filing: 12.02.2004
(51) Int. Cl.: G06F 9/50

(54) **Operating computer system by assigning services to servers according to recorded load values**
Betreiben eines Computersystems durch Zuweisen eines Dienstes zu Servern je nach Aufzeichnungen von Lastwerten
Mise en oeuvre d'un système d'ordinateur par l'attribution de services à des serveurs en fonction d'enregistrements de valeurs de charge

(43) Date of publication of application: 17.08.2005
(73) Proprietor: SAP SE, 69190 Walldorf (DE)
(72) Inventor: Beg,Ajmal, Besley North NSW 2207 (AU)
(74) Representative: Müller-Boré & Partner Patentanwälte PartG mbB

(56) References cited:
- WO-A-01/90903
- US-A- 5 915 095
- US-A1- 2003 105 797
- GOSWAMI K K ET AL: "Load sharing based on task resource prediction" 3 January 1989 (1989-01-03), PROCEEDINGS OF THE ANNUAL HAWAII INTERNATIONAL CONFERENCE ON SYSTEM SCIENCES, XX, XX, PAGE(S) 921-927 , XP002169787 * figure 1 * * page 922, left-hand column, lines 40-48 * * page 922, right-hand column, lines 1-28 * * page 923, left-hand column, lines 7-50 *
- GRAUPNER SVEN, KOTOV VADIM, TRINKS HOLGER: "A framework for analysing andorganizing complex systems" HP LABS - TECHNICAL REPORTS, [Online] no. HP-2001-04, 14 February 2001 (2001-02-14), pages 1-16, XP002292691 Retrieved from the Internet: URL:http://www.hpl.hp.com/techreports/2001 /HPL-2001-24.pdf> [retrieved on 2004-08-16]
- YOURAN LAN ET AL: "A dynamic central scheduler load balancing mechanism" 28 March 1995 (1995-03-28), COMPUTERS AND COMMUNICATIONS, 1995., CONFERENCE PROCEEDINGS OF THE 1995 IEEE FOURTEENTH ANNUAL INTERNATIONAL PHOENIX CONFERENCE ON SCOTTSDALE, AZ, USA 28-31 MARCH 1995, NEW YORK, NY, USA,IEEE, US, PAGE(S) 734-740 , XP010149418 ISBN: 0-7803-2492-7 * page 734, left-hand column, lines 29-34 * * page 735, right-hand column, lines 3-5,32-37 * * page 734, right-hand column, lines 18-26 * * page 735, right-hand column, line 18 - page 737, left-hand column, line 1; figures 1,2 *
- OHTA T ET AL: "A JOB DEPENDENT DISPATCHING SCHEME IN A HETEROGENEOUS MULTISERVER NETWORK", IEICE TRANSACTIONS ON COMMUNICATIONS, COMMUNICATIONS SOCIETY, TOKYO, JP, vol. E77-B, no. 11, 1 November 1994 (1994-11-01), pages 1380-1387, XP000504585, ISSN: 0916-8516

## Description

### Technical field

The present invention generally relates to data processing and, more particularly, relates to computer systems, programs and methods for operating systems with multiple computers that execute software services.

### Background art

Modern computer systems are usually set up of computers that operate in combination. In this respect, the computers are called servers. Each server executes one or more software services or tasks that contribute to a variety of business applications. The services range from email services to complex business transaction services.

In a typical environment of a computer system, human users log on, start or stop services and log out.

Some computer systems use internal services that correspond to the human user. For example, in a distributed system with an application sub-system and a database sub-system, the human user communicates with the application sub-system, and the application sub-system communicates with the database sub-system correspondingly through an intermediate service (sometimes called system user).

Each service places load on its server. Services are continuously added or removed so that the overall load goes up and down with the time. The system has to accommodate peak loads.

In the system, a balancer periodically determines the load on each server (load distribution) and shifts services between the servers.

The balancer periodically determines the load for a particular server, for example, (i) by counting the number of services that are executed on that particular server, (ii) by counting the human users that are logged on, (iii) by evaluating the communication between sub-systems, or otherwise. The balancer assigns new services (or human users, or sub-systems) to a server that has sufficient capacity. This approach is suitable for substantially equal load per service (or user) and for servers with substantially equal capacity.

### Disclosure of the invention

### Technical problem

However, this approach appears problematic in computer systems with differences between the various services and servers. For example, two servers with different specification (e.g., available hardware, operating system) offer different capacities for one and the same service. Hence, the capacity of the servers in the system is not equally distributed.

In a computing on demand approach, any service should be available shortly after the demand arises. Also, the server should reliably perform the service even if the service increases the load (to the server). Further, involving human administrators in assigning services to servers should be avoided.

US 2003/0105797 A1 discloses a process and a system for spreading requests for a service among a set of servers, where each one has a specified load, a load within each time frame. The method comprises the step of directing the requests to a selected server if said server has remaining capacity to handle said expected load.

The publication K. Goswami et al., "Load Sharing Based on Task Resource Prediction, Proceedings of the Annual Hawaii International Conference on System Sciences, January 03, 1989, pages 921-927 discloses a method for load sharing in a distributed environment comprising a plurality of homogenous processors connected by a single linear communication channel. The method uses prediction based policies based on a statistical pattern recognition scheme to accurately predict resource requirements based on past usage.

The publication Ohta et al.: "A job dependent dispatching scheme in a heterogeneous multiserver network", IEICE Transactions on Communications, Tokyo, JP, vol. E77-B, no. 11, pp. 1380 - 1387) describes a job dispatching scheme, wherein a dispatching daemon selects an adequate server for each job using knowledge stored in three information bases, namely a job, a resource and an environment information base. A job is executed by a service daemon. Upon completing each job, the service daemon gets a statistic of the job end returns it to the dispatching daemon where the job came from, so that the statistic will be available at the next dispatching time.

There is an ongoing need to provide computer systems, programs and methods that alleviate the above and other problems.

### Technical solution

The above and other objects of the invention are solved by method, system and computer program according to the independent claims.

In one general aspect, the present invention relates to operating a computer system with a plurality of servers that execute software services. A controller assigns services to servers of the plurality. The controller periodically records a numerical value of the actual load that services in operation place on the servers and - upon receiving a request for executing a particular service again - the controller estimates an expected load by reading the numerical value for that particular service from record, and assigns the particular service to a particular server that has a capacity matching the expected load. The load of a service is a numerical value indicating to what extend a service demands computation from a server. The capacity of a server is a numerical value indicating computation that the server offers to services, said capacity being determined as the maximum capacity minus the actual load of all services on that server. The load and the capacity are measured in any one of operations per time, memory consumption, number of standard-sized services that are performed simultaneously, number of memory accesses per time, central processing unit time and database time. The capacity of a server is the maximum capacity minus the actual load of all services on that server. The controller processes said load and capacity by using categories and the step of assigning a particular service to a particular server comprises assigning the particular service to a particular server that has a capacity category matching the category of the expected load. The processing of load and capacity includes relating measurement values of said load and capacity to categories. The method further comprising the step of re-categorizing by the controller said load and capacity as the time progresses, thereby considering changes of load and capacity over time.

Further aspects and features are given in the dependent claims as well as in the figures and in the description.

### Advantageous effects

The controller can use information collected in the past (i.e., before receiving the request) in assigning the services in the future (i.e., after receiving the request). This allows optimised use of server capacities.

### Brief Description of Drawings

FIG. 1 is a simplified block diagram of a computer system with a plurality of servers in operation according to the invention;
FIG. 2 is a legend, especially for FIG. 1;
FIG. 3 is a flow chart diagram of a method according to the present invention;
FIG. 4 is a flow chart diagram of the method in an embodiment that focuses on human users;
FIG. 5 is simplified block diagram of the computer system before and after receiving a service request; and
FIG. 6 is a block diagram of a computer system in that the present invention can be implemented.

### Best mode for carrying out the invention

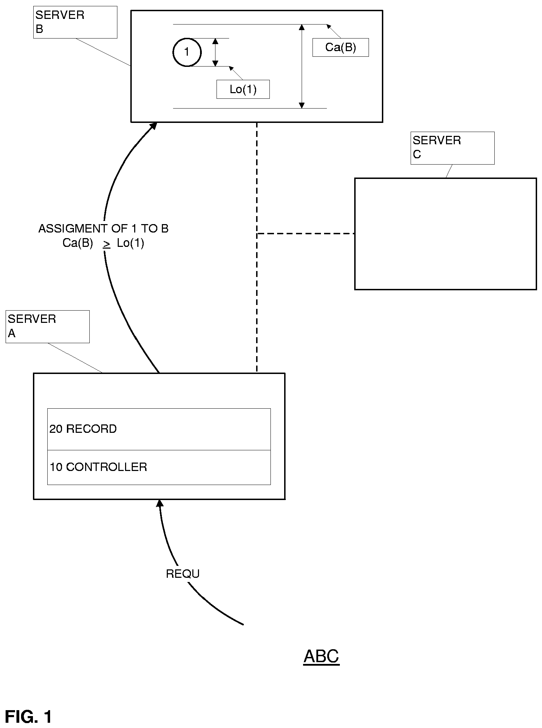

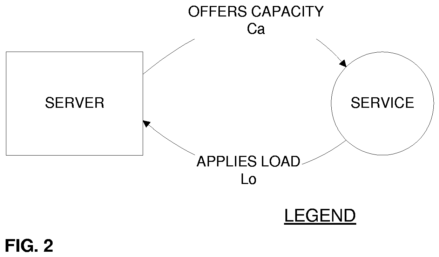

FIGS. 1-2 illustrate a simplified block diagram of computer system ABC with a plurality of servers A, B and C in operation according to the invention. Rectangles symbolize the servers (usually with hardware, operating system, network software); and the circle symbolizes a service (cf. FIG. 2). Dashed lines symbolize network connections between the servers

Server A is the platform for operating controller 10 and record 20. Service request REQU to controller 10 originates, for example, (i) from an intermediate service, (ii) from a human user (who is logging on or who starts a service), or (iii) from a sub-system (e.g., application sub-system to database sub-system).

The service load Lo is a numerical value (i.e. quantity) indicating to what extend a service demands computation from the server. Load Lo is measured in physical quantities, for example, in operations per time, memory consumption, number of standard-size services that are performed simultaneously, number of memory accesses per time, central processing unit (CPU) time, database time and so on. Collecting data over time and applying statistics is also convenient (e.g., average, median, minimum, maximum). Persons of skill in the art can apply other measurements. The figure symbolizes the load by the diameter of the circle (e.g. Lo(1) for load by service 1).

The server capacity Ca is the numerical value that indicates computation that the server offers to services. Capacity Ca is comparable to load Lo, and is therefore measured likewise. FIG. 1 symbolizes Capacity Ca(B) (capacity of server B) by the distances between parallel lines.

Capacity and load match each other when the capacity value is equal to or larger than the load value (Ca = Lo, Ca > Lo, respectively). According to the present invention, controller 10 has assigned service 1 to server B (plain arrow to B). The capacity Ca(B) of server B is larger than (or equal) to the load Lo(1) of service 1. FIG. 1 illustrates this as well: the circle for service 1 fits into the lines in server B.

Matching can also be expressed by a capacity-to-load ratio Ca/Lo (i.e. matching if 1 or higher), by a capacity-to-load difference (i.e. matching if zero or higher) or otherwise.

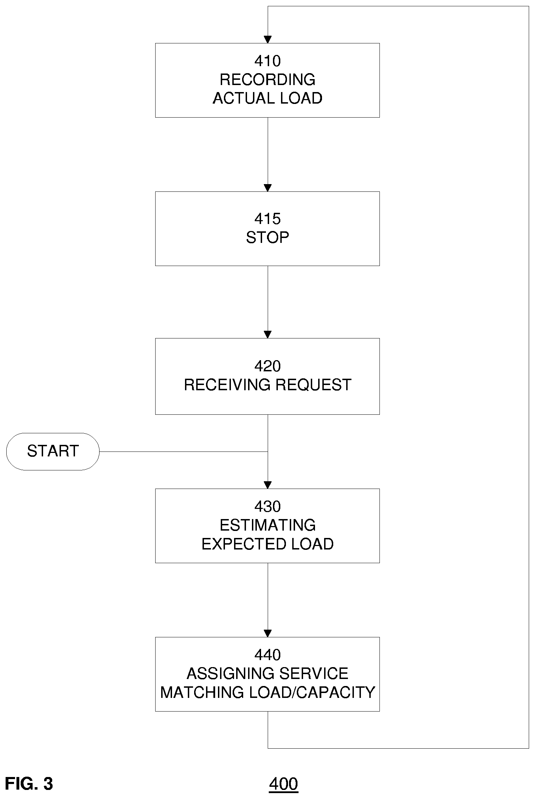

FIG. 3 is a flow chart diagram of method 400 for operating a computer system (cf. ABC) with a plurality of servers (e.g., A, B, C) that execute software services (e.g., service 1). Referring to the example of FIG. 1, controller 10 assigns services to servers of the plurality by periodically recording (step 410) a numerical value of the actual load that services in operation place on the servers and - upon receiving (step 420) request REQU for executing particular service 1 again - determining (step 430) an expected load by reading the numerical value for that particular service 1 from record, and assigning (step 440) particular service 1 to particular server B that has capacity Ca(B) matching the expected load.

Recording the load stops when the server does no longer perform the service (cf. box 415). Method 400 is executed in repetitions, for example, recording (step 410) is repeated as soon as the service is assigned (arrow from 440 to 410) or during a time in that requests are absent.

Looking at the time point of the request (step 420), the time can be divided into past and future (i.e. before or after receiving the request). The controller evaluates information that has been collected in the past (i.e., actual load in record 20) to estimate the load for services in the future. The controller assigns a service to a server for that the ratio Ca/Lo is high enough for performing the service (e.g. to ensure a minimum service speed). In other words, the controller assigns the service to the server that has sufficient capacity.

In the exemplary implementation of FIG. 1, the numerical values of the actual load and of the expected load are equal. This is convenient but not necessary; the explanation continues with further examples where the values could be different.

Optionally, controller 10 processes load Lo and capacity Ca by using categories. Categories such as LOW, MEDIUM, HIGH, VERY HIGH, MAX ease processing. There is no need to process exact numerical values such as measurement values. For example, the controller categories that are products of a factor M with a standard quantity.

The standard quantity is an absolute measurement term. For example, taking the category LOW as standard, Type MINIMAL corresponds to 1LOW or 1000 operations per second; Type MEDIUM corresponds to 4LOW; Type HIGH corresponds to 8LOW; Type VERY HIGH corresponds to 40LOW; and Type MAXIMUM corresponds to 300LOW. The multiplication factors 1, 4, 8, 40 and 300 are chosen for the convenience of explanation, other factor can be used as well.

Since Lo and Ca are comparable, the standard quantity is applicable to services as well as to servers (cf. FIG. 2). Persons of skill in the art can use their expertise to relate measurement values (e.g., operations per time, see above) to categories and to choose multiplication factors.

Controller 10 processes load and capacity by re-categorizing as the time progresses. Therefore, changes of load or capacity over the time can be considered. Expanding the categories by a time dimension is an advantage. Category changes are applicable for load and for capacity. Some services typically change the load by one category (e.g., from MEDIUM to HIGH, or vice versa) after a certain time in operation. The same applies for servers that change the capacity by category after a certain time in operation. The changes can go in both directions: increase or decrease. Again, there is no need to process exact values, processing "step up" or "step down" information is easier.

Convenient is applying category changes over time to compensate load changes in one direction with capacity changes in opposite direction. For example, controller 10 considers an increase of the load expected for a time point (in the future, e.g. one minute from REQU) by allocating capacities from that time point to the service. In an alternative, controller 10 expects load decrease for the time point and frees server capacity from that time point for other services.

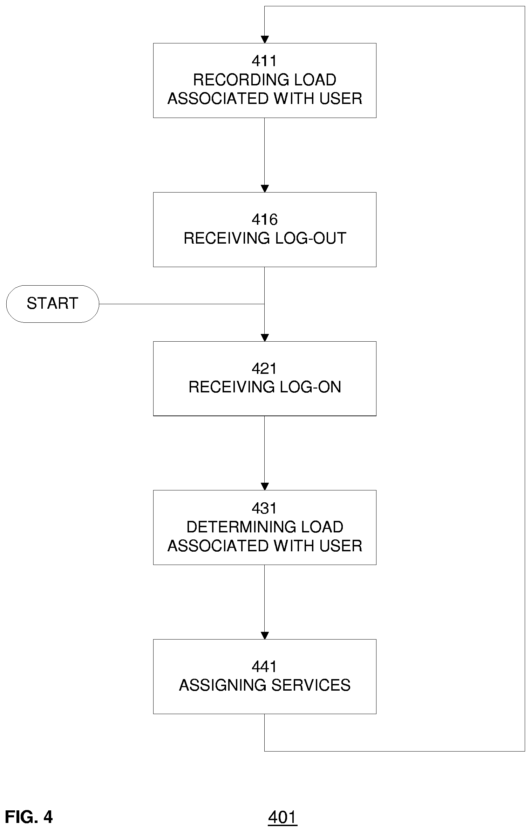

FIG. 4 is a flow chart diagram of method 401 according to the present invention in an embodiment considering human users.

As already explained in connection with FIGS. 1-3, the service request REQU can arrive from different sources. Applying categorization to human users is a further advantageous feature of the invention.

Method 401 is an alternative embodiment of method 400. Steps 410, 420, 430 and 440 are adapted to service requests from human users: Recording the actual load (step 411) comprises to record the load for services that are associated with a particular user. Receiving the request REQU (step 421) comprises to receive a log-on-request for the particular user. Determining the expected load (step 431) comprises to estimate (430) the load for substantially all services that are started by the particular user. Assigning the service to the server (step 441) comprises to assign that services that are associated with the particular user to servers with sufficient capacity. Stop 416 comprises receiving a log-out-request and removing the assignment.

Optionally, categorization is applied. Re-categorizing with the time is advantageous for users known to potentially increase the service load. For example, users of Internet patent databases (i.e. service) turn the load from LOW to HIGH category, when they have found a publication and start downloading the scanned images of the publication. By applying the present invention, such users with an increase-load-pattern are recognized upon receiving their log-on-request.

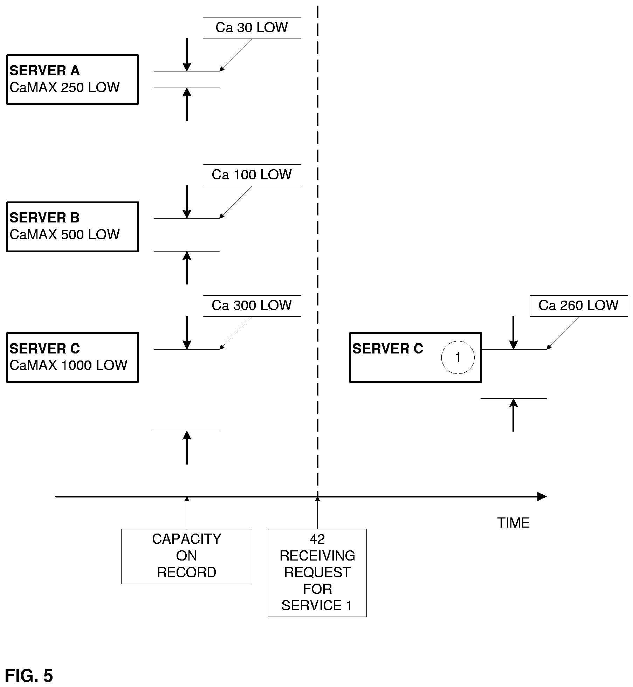

FIG. 5 is simplified block diagram of the computer system ABC in relation to the time point of receiving the service request REQU. The figure summarizes aspects of the invention that have been explained so far.

The progress of time is symbolized by a time axis going from left to right and the time point is given by vertical line 42 (dashed).

Left of line 42 (i.e. before receiving), the servers have maximum (MAX) capacities that are given in categories: Server A has a CaMAX of 250LOW; server B has a CaMAX of 500LOW; and server C has a CaMAX of 1000LOW (i.e. factors of LOW). Since the server already executes some services, their actual capacities are smaller. Controller 10 has recorded the load of the services (cf. step 410/411). Since recording the load is equivalent to recording an actual capacity, the load is conveniently deducted from the maximum capacity. A person of skill in the art can accomplished this by modifying controller 10 or record 20 (or otherwise) taking into account that the actual capacity Ca of a server equals its maximum capacity CaMAX minus the actual load of all services on that server. The actual capacities are illustrated by parallel lines and have the following values: server A with Ca of 30LOW, server B with Ca of 100LOW, and server C with Ca of 300LOW.

As illustrated by line 42, a request for service 1 is received (step 420/421). The load is estimated (cf. step 430/431). From record it is read that service 1 would require a capacity of 40LOW. Service is therefore assigned to server C (cf. step 440/441).

Right of line 42, server C is illustrated as it executes service 1 (circle 1 in rectangle C). The record is now updated to the remaining capacity of 260LOW (cf. repetition of step 410/411)

Having described details of the invention, persons of skill in the art are can modify the exemplary implementation, for example, by placing controller 10 and record 20 to one or more different servers, by adding or removing servers, by placing controller and/or record outside the system, or otherwise. In the context of the present invention, a "user" is not necessarily limited to a human entity, as it might well be another piece of equipment or a software agent.

The features can be implemented alone or in combinations; further categories or sub-categories can be introduced. Although the present invention has been described with focus on a method, it is also applicable to the computer system, the computer program and to a computer-readable medium.

The description closes by referring to an exemplary computer system in that the servers A, B and C can be implemented by computers 900-902 and controller 10 and record 20 can be programmed into computer program product 100.

### Mode(s) for carrying out the invention

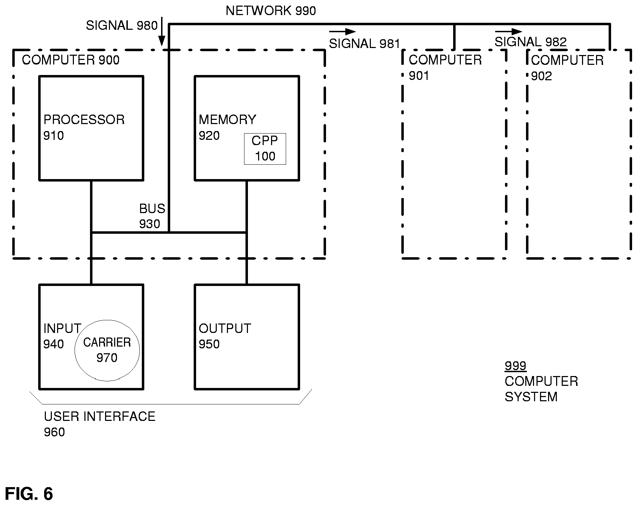

FIG. 6 illustrates a simplified block diagram of exemplary computer system 999 having a plurality of computers 900, 901, 902 (or even more).

Computer 900 can communicate with computers 901 and 902 over network 990. Computer 900 has processor 910, memory 920, bus 930 and, optionally, input device 940 and output device 950 (I/O devices, user interface 960). As illustrated, the invention is implemented by computer program product 100 (CPP), carrier 970 and signal 980.

In respect to computer 900, computer 901/902 is sometimes referred to as "remote computer", computer 901/902 is, for example, a server, a peer device or other common network node, and typically has many or all of the elements described relative to computer 900.

Computer 900 is, for example, a conventional personal computer (PC), a desktop device or a hand-held device, a multiprocessor computer, a pen computer, a microprocessor-based or programmable consumer electronics device, a minicomputer, a mainframe computer, a personal mobile computing device, a mobile phone, a portable or stationary personal computer, a palmtop computer or the like.

Processor 910 is, for example, a central processing unit (CPU), a microcontroller unit (MCU), digital signal processor (DSP), or the like.

Memory 920 has elements that temporarily or permanently store data and instructions. Although memory 920 is illustrated as part of computer 900, memory can also be implemented in network 990, in computers 901/902 and in processor 910 itself (e.g., cache, register), or elsewhere. Memory 920 can be a read only memory (ROM), a random access memory (RAM), or a memory with other access options. Memory 920 is physically implemented by computer-readable media, for example: (a) magnetic media, like a hard disk, a floppy disk, or other magnetic disk, a tape, a cassette tape; (b) optical media, like optical disk (CD-ROM, digital versatile disk - DVD); (c) semiconductor media, like DRAM, SRAM, EPROM, EEPROM, memory stick.

Optionally, memory 920 is distributed. Portions of memory 920 can be removable or non-removable. For reading from media and for writing in media, computer 900 uses well-known devices, for example, disk drives, or tape drives.

Memory 920 stores modules such as, for example, a basic input output system (BIOS), an operating system (OS), a program library, a compiler, an interpreter, and a text- processing tool. Modules are commercially available and can be installed on computer 900. For simplicity, these modules are not illustrated.

CPP 100 has program instructions and - optionally - data that cause processor 910 to execute method steps of the present invention. In other words, CPP 100 can control the operation of computer 900 and its interaction in network system 999 so that is operates to perform in accordance with the invention. For example and without the intention to be limiting, CPP 100 can be available as source code in any programming language, and as object code ("binary code") in a compiled form.

Although CPP 100 is illustrated as being stored in memory 920, CPP 100 can be located elsewhere. CPP 100 can also be embodied in carrier 970.

Carrier 970 is illustrated outside computer 900. For communicating CPP 100 to computer 900, carrier 970 is conveniently inserted into input device 940. Carrier 970 is implemented as any computer readable medium, such as a medium largely explained above (cf. memory 920). Generally, carrier 970 is an article of manufacture having a computer readable medium with computer readable program code to cause the computer to perform methods of the present invention. Further, signal 980 can also embody computer program product 100.

Having described CPP 100, carrier 970, and signal 980 in connection with computer 900 is convenient. Optionally, further carriers and further signals embody computer program products (CPP) to be executed by further processors in computers 901 and 902.

Input device 940 provides data and instructions for processing by computer 900. Device 940 can be a keyboard, a pointing device (e.g., mouse, trackball, cursor direction keys), microphone, joystick, game pad, scanner, or disc drive. Although the examples are devices with human interaction, device 940 can also be a device without human interaction, for example, a wireless receiver (e.g., with satellite dish or terrestrial antenna), a sensor (e.g., a thermometer), a counter (e.g., a goods counter in a factory). Input device 940 can serve to read carrier 970.

Output device 950 presents instructions and data that have been processed. For example, this can be a monitor or a display, (cathode ray tube (CRT), flat panel display, liquid crystal display (LCD), speaker, printer, plotter, vibration alert device. Output device 950 can communicate with the user, but it can also communicate with further computers.

Input device 940 and output device 950 can be combined to a single device. Any device 940 and 950 can be provided optional.

Bus 930 and network 990 provide logical and physical connections by conveying instruction and data signals. While connections inside computer 900 are conveniently referred to as "bus 930", connections between computers 900-902 are referred to as "network 990". Optionally, network 990 includes gateways which are computers that specialize in data transmission and protocol conversion.

Devices 940 and 950 are coupled to computer 900 by bus 930 (as illustrated) or by network 990 (optional). While the signals inside computer 900 are mostly electrical signals, the signals in network are electrical, electromagnetic, optical or wireless (radio) signals.

Networks are commonplace in offices, enterprise-wide computer networks, intranets and the Internet (e.g., world wide web). Network 990 can be a wired or a wireless network. To name a few network implementations, network 990 can be, for example, a local area network (LAN), a wide area network (WAN), a public switched telephone network (PSTN); a Integrated Services Digital Network (ISDN), an infra-red (IR) link, a radio link, like Universal Mobile Telecommunications System (UMTS), Global System for Mobile Communication (GSM), Code Division Multiple Access (CDMA), or satellite link.

A variety of transmission protocols, data formats and conventions is known, for example, as transmission control protocol/internet protocol (TCP/IP), hypertext transfer protocol (HTTP), secure HTTP, wireless application protocol (WAP), unique resource locator (URL), a unique resource identifier (URI), hypertext markup language (HTML), extensible markup language (XML), extensible hypertext markup language (XHTML), wireless markup language (WML), Standard Generalized Markup Language (SGML).

Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card.

### References

- A: server
- B: server
- C: server
- ABC: computer system
- Ca: capacity
- Lo: load
- M: multiplication factor
- REQU: request
- 1: service
- 10: controller
- 20: record
- 42: dashed vertical line, time point of REQU
- 1 0 0: computer program
- 400, 401: method
- 4x0, 4x1: method steps
- 415/416: stop
- 9xx: computer and its components

## Claims

1. Method (400) for operating a computer system (ABC) with a plurality of servers (A, B, C) that execute software services, wherein a controller (10) assigns services to servers (A, B or C) of the plurality, **characterized in that**
the controller (10) periodically records (410) a numerical value of the actual load that services in operation place on the servers (A, B, C), said services including a particular service (1), and
upon receiving (420) a request (REQU) for executing the particular service (1), the controller (10) estimates (430) an expected load by reading the numerical value for the load recorded for that particular service (1) from record, and assigns (440) the particular service (1) to a particular server (B) that has a capacity greater or equal the expected load, wherein
the load of a service (Lo) is a numerical value indicating to what extend a service (1) demands computation from a server (A, B, C),
the capacity (Ca) of a server (A, B, C) is a numerical value indicating computation that the server (A, B, C) offers to services, said capacity (Ca) being determined as the maximum capacity (CaMAX) minus the actual load of all services on that server; and
said load (Lo) and said capacity (Ca) are measured in any one of operations per time, memory consumption, number of standard-sized services that are performed simultaneously, number of memory accesses per time, central processing unit time and database time;
wherein the controller (10) processes said load (Lo) and capacity (Ca) by using categories and the step of assigning a particular service (1) to a particular server (B) comprises assigning the particular service to a particular server (B) that has a capacity category matching the category of the expected load,
wherein said processing of load (Lo) and capacity (Ca) includes relating measurement values of said load (Lo) and capacity (Ca) to categories, and
wherein said method further comprises:
the step of re-categorizing by the controller (10) said load (Lo) and capacity (Ca) as the time progresses, thereby considering changes of load (Lo) and capacity (Ca) over time.

2. Method (400) according to claim 1, comprising the step of compensating by the controller (10) of a change of load with change of capacity, wherein
the controller (10) considers an increase of the load expected for a time point after receiving said request by allocating capacities from that time point to the service; and
the controller (10) considers a decrease of the load expected for the time point after receiving said request and frees server capacity from that time point for other services.

3. Method according to claim 1 or 2, wherein said receiving (420) a request (REQU) for executing the particular service (1) comprises receiving a service request from a human user who is logging on or who starts the particular service (1).

4. A system adapted to perform the method of any of claims 1 to 3.

5. A computer program product comprising program instructions for causing a computer to perform the methods of any of claims 1 to 3.

6. A computer-readable medium comprising instructions executable on a computer system for performing the methods of any of claims 1 to 3.

## Patentansprüche

1. Verfahren (400) zum Betreiben eines Computersystems (ABC) mit einer Mehrzahl von Servern (A, B, C), die Softwaredienste ausführen, wobei ein Controller (10) Servern (A, B oder C) der Mehrzahl Dienste zuweist, **dadurch gekennzeichnet, dass**
der Controller (10) periodisch (410) einen numerischen Wert der tatsächlichen Last aufzeichnet, mit der Dienste in Betrieb die Server (A, B, C) belasten, wobei die Dienste einen bestimmten Dienst (1) umfassen, und
beim Empfangen (420) einer Anforderung (REQU) zum Ausführen des bestimmten Dienstes (1) der Controller (10) eine erwartete Last durch Lesen des numerischen Werts für die für diesen bestimmten Dienst (1) aufgezeichnete Last aus der Aufzeichnung schätzt (430) und den bestimmten Dienst (1) einem bestimmten Server (B) zuweist (440), dessen Kapazität größer oder gleich der erwarteten Last ist, wobei
die Last eines Dienstes (Lo) ein numerischer Wert ist, der angibt, inwieweit bzw. in welchem Umfang ein Dienst (1) die Berechnung von einem Server (A, B, C) verlangt,
die Kapazität (Ca) eines Servers (A, B, C) ein numerischer Wert ist, der die Berechnung angibt, die der Server (A, B, C) für Dienste anbietet, wobei die Kapazität (Ca) als maximale Kapazität (CaMAX) minus der tatsächlichen Last aller Dienste auf diesem Server bestimmt wird; und
die Last (Lo) und die Kapazität (Ca) in einer von Operationen pro Zeit, Speicherverbrauch, Anzahl von Diensten in Standardgröße, die gleichzeitig ausgeführt werden, Anzahl von Speicherzugriffen pro Zeit, Zeit der zentralen Verarbeitungseinheit und Datenbankzeit gemessen werden;
wobei der Controller (10) die Last (Lo) und die Kapazität (Ca) unter Verwendung von Kategorien verarbeitet und der Schritt des Zuweisens eines bestimmten Dienstes (1) zu einem bestimmten Server (B) das Zuweisen des bestimmten Dienstes zu einem bestimmten Server (B) umfasst, der eine Kapazitätskategorie aufweist, die mit der Kategorie der erwarteten Last übereinstimmt,
wobei das Verarbeiten der Last (Lo) und der Kapazität (Ca) das Zuordnen von Messwerten der Last (Lo) und der Kapazität (Ca) zu Kategorien beinhaltet, und
wobei das Verfahren ferner umfasst:
den Schritt des Neukategorisierens der Last (Lo) und der Kapazität (Ca) durch den Controller (10) mit fortschreitender Zeit, wodurch Änderungen der Last (Lo) und der Kapazität (Ca) über die Zeit berücksichtigt werden.

2. Verfahren (400) nach Anspruch 1, umfassend den Schritt des Kompensierens einer Änderung der Last mit der Änderung der Kapazität durch den Controller (10), wobei
der Controller (10) eine Zunahme der Last, die für einen Zeitpunkt nach dem Empfang der Anforderung erwartet wird, berücksichtigt, indem Kapazitäten von diesem Zeitpunkt an den Dienst zugeteilt werden; und
der Controller (10) eine Abnahme der Last, die für den Zeitpunkt nach dem Empfang der Anforderung erwartet wird, berücksichtigt und Serverkapazität ab diesem Zeitpunkt für andere Dienste freigibt.

3. Verfahren nach Anspruch 1 oder 2, wobei das Empfangen (420) einer Anforderung (REQU) zum Ausführen des bestimmten Dienstes (1) das Empfangen einer Dienstanforderung von einem menschlichen Benutzer umfasst, der sich anmeldet oder der den bestimmten Dienst startet (1).

4. System, das angepasst ist, das Verfahren nach einem der Ansprüche 1 bis 3 durchzuführen.

5. Computerprogrammprodukt, umfassend Programmanweisungen, um einen Computer zu veranlassen, die Verfahren nach einem der Ansprüche 1 bis 3 durchzuführen.

6. Computerlesbares Medium, umfassend Anweisungen, die auf einem Computersystem ausführbar sind, um die Verfahren nach einem der Ansprüche 1 bis 3 durchzuführen.

## Revendications

1. Procédé (400) pour opérer un système informatique (ABC) avec une pluralité de serveurs (A, B, C) qui exécutent des services logiciels, dans lequel un contrôleur (10) attribue des services à des serveurs (A, B ou C) de la pluralité, **caractérisé en ce que**
le contrôleur (10) enregistre périodiquement (410) une valeur numérique de la charge réelle que des services en opération placent sur les serveurs (A, B, C), lesdits services incluant un service particulier (1), et
dès la réception (420) d'une requête (REQU) pour exécuter le service particulier (1), le contrôleur (10) estime (430) une charge attendue en lisant la valeur numérique pour la charge enregistrée pour ce service particulier (1) depuis l'enregistrement et attribue (440) le service particulier (1) à un serveur particulier (B) qui a une capacité supérieure ou égale à la charge attendue, dans lequel
la charge d'un service (Lo) est une valeur numérique indiquant dans quelle mesure un service (1) exige du calcul d'un serveur (A, B, C),
la capacité (Ca) d'un serveur (A, B, C) est une valeur numérique indiquant le calcul que le serveur (A, B, C) offre à des services, ladite capacité (Ca) étant déterminée en tant que capacité maximale (CaMAX) moins la charge réelle de tous les services sur ce serveur ; et
ladite charge (Lo) et ladite capacité (Ca) sont mesurées dans l'une quelconque d'opérations par temps, consommation de mémoire, nombre de services de taille standard qui sont réalisés simultanément, nombre d'accès à la mémoire par temps, temps d'unité centrale et temps de base de données ;
dans lequel le contrôleur (10) traite ladite charge (Lo) et capacité (Ca) en utilisant des catégories et l'étape d'attribution d'un service particulier (1) à un serveur particulier (B) comprend attribuer le service particulier à un serveur particulier (B) qui a une catégorie de capacité correspondant à la catégorie de la charge attendue,
dans lequel ledit traitement de la charge (Lo) et capacité (Ca) inclut relier des valeurs de mesure de ladite charge (Lo) et capacité (Ca) à des catégories, et dans lequel ledit procédé comprend en outre :
l'étape de recatégoriser par le contrôleur (10) ladite charge (Lo) et capacité (Ca) à mesure que le temps progresse, tenant de ce fait compte de changements de charge (Lo) et capacité (Ca) dans le temps.

2. Procédé (400) selon la revendication 1, comprenant l'étape de compensation par le contrôleur (10) d'un changement de charge par un changement de capacité, dans lequel
le contrôleur (10) tient compte d'une augmentation de la charge attendue pour un point dans le temps après réception de ladite requête en allouant des capacités depuis ce point dans le temps au service ; et
le contrôleur (10) tient compte d'une diminution de la charge attendue pour le point dans le temps après réception de ladite requête et libère de la capacité de serveur depuis ce point dans le temps pour d'autres services.

3. Procédé selon la revendication 1 ou 2, dans lequel ladite réception (420) d'une requête (REQU) pour exécuter le service particulier (1) comprend recevoir une requête de service d'un utilisateur humain qui ouvre une session ou qui démarre le service particulier (1).

4. Système adapté à réaliser le procédé selon l'une quelconque des revendications 1 à 3.

5. Produit de programme informatique comprenant des instructions de programme pour amener un ordinateur à réaliser les procédés selon l'une quelconque des revendications 1 à 3.

6. Support lisible par ordinateur comprenant des instructions exécutables sur un système informatique pour réaliser les procédés selon l'une quelconque des revendications 1 à 3.
